(19) **Europäisches Patentamt European Patent Office Office européen des brevets**

(11) **EP 1 353 747 B1**

(12) **FASCICULE DE BREVET EUROPEEN**

(45) Date de publication et mention de la délivrance du brevet:
**25.05.2011 Bulletin 2011/21**

(21) Numéro de dépôt: **02711947.8**

(22) Date de dépôt: **14.01.2002**

(51) Int Cl.:
*B01J 21/12* (2006.01)     *B01J 35/10* (2006.01)
*B01J 37/00* (2006.01)     *B01J 37/20* (2006.01)
*C10G 47/12* (2006.01)

(86) Numéro de dépôt international:
**PCT/FR2002/000119**

(87) Numéro de publication internationale:
**WO 2002/055192 (18.07.2002 Gazette 2002/29)**

(54) **CATALYSEUR COMPORTANT UNE SILICE-ALUMINE ET SON UTILISATION EN HYDROCRAQUAGE DE CHARGES HYDROCARBONEES**

KATALYSATOR, DER EIN SILICIUMDIOXID-ALUMINIUMOXID ENTHÄLT, UND DESSEN VERWENDUNG BEIM HYDROCRACKING VON KOHLENWASSERSTOFF-EINSATZSTOFFEN

CATALYST COMPRISING A SILICA-ALUMINA AND ITS USE IN HYDROCARBON FEEDSTOCK HYDROCRACKING

(84) Etats contractants désignés:
**AT BE CH CY DE DK ES FI FR GB GR IE IT LI LU MC NL PT SE TR**

(30) Priorité: **15.01.2001 FR 0100470**

(43) Date de publication de la demande:
**22.10.2003 Bulletin 2003/43**

(73) Titulaire: **Institut Français du Pétrole 92852 Rueil-Malmaison Cedex (FR)**

(72) Inventeurs:
- **BENAZZI, Eric F-78400 Chatou (FR)**
- **CSERI, Tivadar F-92400 Courbevoie (FR)**
- **ROY-AUBERGER, Magalie F-38300 Bourgoin Jallieu (FR)**
- **EUZEN, Patrick F-69570 DARDYLLY (FR)**

(56) Documents cités:
GB-A- 1 324 205     US-A- 4 139 494
US-A- 4 239 651     US-A- 4 242 236

Remarques:
Le dossier contient des informations techniques présentées postérieurement au dépôt de la demande et ne figurant pas dans le présent fascicule.

EP 1 353 747 B1

## Description

La présente invention concerne un catalyseur tel que défini dans le libellé de la revendication indépendante 1. Les revendications dépendantes contiennent des caractéristiques optionnelles du catalyseur.

La présente invention concerne également un procédé d'hydrocraquage tel que défini dans le libellé de la revendication indépendante 13, les revendications dépendantes contenant des caractéristiques facultatives du procédé.

## Art antérieur

L'hydrocraquage de coupes pétrolières lourdes est un procédé très important du raffinage qui permet de produire, à partir de charges lourdes excédentaires et peu valorisables, les fractions plus légères telles que essences, carburéacteurs et gazoles légers que recherche le raffineur pour adapter sa production à la structure de la demande. Certains procédés d'hydrocraquage permettent d'obtenir également un résidu fortement purifié pouvant constituer une excellente base pour huiles. Par rapport au craquage catalytique, l'intérêt de l'hydrocraquage catalytique est de fournir des distillats moyens, carburéacteurs et gazoles, de très bonne qualité. L'essence produite présente un indice d'octane beaucoup plus faible que celle issue du craquage catalytique.

Les catalyseurs utilisés en hydrocraquage sont tous du type bifonctionnel associant une fonction acide à une fonction hydrogénante. La fonction acide est apportée par des supports de grandes surfaces (150 à 800 $m^2.g^{-1}$ généralement) présentant une acidité superficielle, telles que les alumines halogénées (chlorées ou fluorées notamment), les combinaisons d'oxydes de bore et d'aluminium, les silice-alumines et les zéolithes. La fonction hydrogénante est apportée soit par un ou plusieurs métaux du groupe VIII de la classification périodique des éléments, tels que fer, cobalt, nickel, ruthénium, rhodium, palladium, osmium, iridium et platine, soit par une association d'au moins un métal du groupe VI de la classification périodique tels que molybdène et tungstène et au moins un métal du groupe VIII.

L'équilibre entre les deux fonctions acide et hydrogénante est le paramètre fondamental qui régit l'activité et la sélectivité du catalyseur. Une fonction acide faible et une fonction hydrogénante forte donnent des catalyseurs peu actifs, travaillant à température en général élevée (supérieure ou égale à 390-400 °C), et à vitesse spatiale d'alimentation faible (la VVH exprimée en volume de charge à traiter par unité de volume de catalyseur et par heure est généralement inférieure ou égale à 2) mais dotés d'une très bonne sélectivité en distillats moyens. Inversement, une fonction acide forte et une fonction hydrogénante faible donnent des catalyseurs actifs mais présentant de moins bonnes sélectivités en distillats moyens (carburéacteurs et gazoles). La recherche d'un catalyseur amélioré sera donc centrée sur un choix judicieux de chacune des fonctions pour ajuster le couple activité/sélectivité du catalyseur.

Dans les supports peu acides, on trouve la famille des silice-alumines. De nombreux catalyseurs d'hydrocraquage à base de silice-alumine sont associés soit à un métal du groupe VIII soit, de préférence quand les teneurs en poisons hétéroatomiques de la charge à traiter dépassent 0,5 % en poids, à une combinaison de sulfures des métaux des groupes VIB et VIII). Le brevet GB-A-1324205 décrit un catalyseur et procédé d'hydrogénation.

Le brevet EP-666894-B2 nous enseigne que l'utilisation d'un catalyseur comprenant un composant d'hydrogénation supporté par une silice-alumine possédant une macroporosité (diamètre de pore supérieur à 100 nm) qui varie de 5% à 50% du volume poreux total, un volume des pores total qui fluctue de 0,6 ml/g à 1,2 ml/g et une teneur en alumine qui se situe dans la plage de 5 à 75% en poids permet de traiter en présence d'hydrogène des charges particulières, de manière à obtenir des huiles de base lubrifiantes possédant un indice de viscosité supérieur à 135. La charge hydrocarbonée est choisie parmi (i) les gatsch, (ii) les cires paraffines synthétiques et (iii) des charges provenant d'un brut paraffinique contenant au moins 30% en poids de cire ou paraffine et possédant au moins 80% en poids de composés bouillants au delà de 300°C et au plus 30% en poids composés bouillants au delà de 540°C.

Les travaux de recherche effectués par le demandeur sur de nombreux solides acides et sur les phases actives hydrogénantes, l'ont conduit à découvrir que, de façon surprenante, il est obtenu avec le catalyseur selon l'invention des sélectivités en distillats moyens (kérosène + gasoil), plus élevées qu'avec les catalyseurs contenant une silice-alumine connus dans l'art antérieur Par ailleurs, de façon très avantageuse, ce catalyseur permet d'obtenir des sélectivités en gasoil plus élevées, que celles en kérosène. Ledit catalyseur comprend au moins une silice-alumine particulière, éventuellement au moins un liant, (généralement poreux tel que l'alumine), au moins un élément du groupe VIB de ladite classification, (tels que le chrome, le molybdène ou le tungstène, de préférence le molybdène ou le tungstène), de façon encore plus préférée le tungstène, ou un élément du groupe VIII choisi parmi le Fer, le Cobalt ou le Nickel.

[0009]   , éventuellement au moins un élément choisi dans le groupe formé par P, B et Si (de préférence B et/ou Si), éventuellement un élément du groupe VIIA, (et de préférence le fluor) et éventuellement au moins un élément du groupe VII B (et de préférence le manganèse).

On a pu observer que ce catalyseur présente en hydrocraquage une activité au moins égale et une sélectivité en distillat moyen supérieure par rapport aux formules catalytiques connues de l'art antérieur.

**Description détaillée de l'invention**

L'invention a pour objet un catalyseur tel que défini dans les libellés des revendications 1-12, comportant au moins un élément hydro-déshydrogénant (de préférence déposé sur le support) et un support comprenant (ou de préférence constitué par) au moins une silice-alumine, ladite silice-alumine possédant les caractéristiques suivantes :

- une teneur pondérale en silice $SiO_2$ comprise entre 10 et 60% de préférence entre 20 et 60% et de manière encore plus préférée entre 30 et 50% poids,
- une teneur en Na inférieure à 300 ppm poids et de préférence inférieure à 200 ppm poids,
- un volume poreux total compris entre 0.5 et 1.2 ml/g mesuré par porosimétrie au mercure,
- la porosité de ladite silice-alumine étant la suivante :

  i/ Le volume des mésopores dont le diamètre est compris entre 40Å et 150Å, et dont le diamètre moyen varie entre 80 et 120 Å représente entre 30 et 80% du volume poreux total précédemment défini et de préférence entre 40 et 70%.

  ii/ Le volume des macropores, dont le diamètre est supérieur à 500 Å, et de préférence compris entre 1000 Å et 10000 Å représente entre 20 et 80% du volume poreux total et de préférence entre 30 et 60% du volume poreux total et de manière encore plus préférée le volume des macropores représente au moins 35% du volume poreux total.

- une surface spécifique supérieure à 200 $m^2/g$ et de préférence supérieure à 250 $m^2/g$.

Les mesures suivantes ont également été effectuées sur la silice-alumine :

- Les diffractogrammes des silice-alumines de l'invention, obtenus par diffraction aux rayons X, correspondent à un mélange de la silice et de l'alumine avec une certaine évolution entre l'alumine gamma et la silice en fonction de la teneur en $SiO_2$ des échantillons. Dans ces silice-alumines on observe une alumine moins bien cristallisée par rapport à l'alumine seule.
- Les spectres du RMN de $^{27}Al$ des silice-alumines montrent deux massifs de pics distincts. Chaque massif peut être décomposé en au moins deux espèces. Nous observons une large domination des espèces dont le maximum résonne vers 10 ppm et qui s'étend entre 10 et 60 ppm. La position du maximum suggère que ces espèces sont essentiellement de type $Al_{VI}$ (octaédrique). Sur tous les spectres nous observons un deuxième de type d'espèce qui résonne vers 80-110 ppm. Ces espèces correspondraient aux atomes d'$Al_{IV}$ (tétraédrique). Pour des teneurs en silice de la présente invention (entre 10 et 60%), les proportions des $Al_{IV}$ tétraédriques sont proches et s'établissent autour de 20 à 40%, et de manière préférée entre 24 et 31 %.

L'environnement du silicium des silice-alumines étudié par la RMN de $^{29}Si$ montrent les déplacements chimiques des différentes d'espèces de silicium telles que $Q^4$ (-105ppm à - 120 ppm), $Q^3$ (-90ppm à -102 ppm) et $Q^2$ (-75ppm à - 93 ppm). Les sites avec un déplacement chimique à -102 ppm peuvent être des sites de type $Q^3$ ou $Q^4$, nous les appelons dans ce travail sites $Q^{3-4}$. Les silice-alumines de l'invention sont composées de silicium de types $Q^2$, $Q^3$, $Q^{3-4}$ et $Q^4$. De nombreuses espèces seraient de type $Q^2$, approximativement de l'ordre de 30 à 50 %. La proportion des espèces $Q^3$ est également importante, approximativement de l'ordre de 10 à 30 %. Les définitions des sites sont les suivantes :

  sites $Q^4$ : Si lié à 4Si(ou Al)
  sites $Q^3$ : Si lié à 3 Si(ou Al) et 1 OH
  sites $Q^2$ : Si lié à 2 Si(ou Al) et 2 OH;

L'homogénéité des supports a été évaluée par Microscopie Electronique à Transmission. Nous cherchons par cette méthode à vérifier l'homogénéité de la répartition de Si et Al à l'échelle nanométrique. Les analyses sont réalisées sur des coupes ultra-fines des supports, par des sondes de taille différente, 50nm ou 15nm. Pour chaque solide étudié, 32 spectres sont enregistrés, dont 16 avec sonde de 50nm et 16 avec sonde à 15nm. Pour chaque spectre, des rapports atomiques Si/Al sont ensuite calculés, avec les moyennes des rapports, le rapport minimum, le rapport maximum et l'écart type de la série. La moyenne des rapports Si/Al mesurée par Microscopie Electronique à Transmission pour les différentes silice-alumines sont proches du rapport Si/Al obtenu par Fluorescence X. L'évaluation du critère homogénéité se fait sur la valeur de l'écart type.

Suivant ces critères, un grand nombre de silice-alumines de la présente invention peuvent être considérées comme hétérogènes car elles présentent des rapports atomiques Si/Al avec des écarts types de l'ordre de 30-40%.

Le support peut être constitué de silice-alumine pure ou résulte du mélange avec ladite silice-alumine d'un liant tel que la silice ($SiO_2$), l'alumine ($Al_2O_3$), les argiles, l'oxyde de titane ($TiO_2$), l'oxyde de bore ($B_2O_3$) et la zircone ($ZrO_2$) et tout mélange des liants précédemment cités. Les liants préférés sont la silice et l'alumine et de manière encore plus préférée l'alumine sous toutes ces formes connues de l'homme du métier, par exemple l'alumine gamma. La teneur pondérale en liant dans le support du catalyseur est comprise entre 0 et 40%, plus particulièrement entre 1 et 40% et de manière encore plus préférée entre 5% et 20%. Il en résulte que la teneur pondérale en silice-alumine est de 60 - 100 %. Cependant, les catalyseurs selon l'invention dont le support est constitué uniquement de silice-alumine sans aucun liant sont préférés.

Le support peut être préparé par mise en forme de la silice-alumine en présence ou en absence de liant par toute technique connue de l'homme du métier. La mise en forme peut être réalisée par exemple par extrusion, par pastillage, par la méthode de la coagulation en goutte (oil-drop), par granulation au plateau tournant ou par toute autre méthode bien connue de l'homme du métier. Au moins une calcination peut être effectuée après l'une quelconque des étapes de la préparation, elle est habituellement effectuée sous air à une température d'au moins 150°C, de préférence au moins 300°C.

Le catalyseur de la présente invention outre le support constitué de la silice-alumine et éventuellement d'un liant renferme en outre et généralement en % poids par rapport à la masse totale du catalyseur :

- 1 à 60%, avantageusement de 2 à 60 %, de préférence de 2 à 50% et de manière encore plus préférée de 2 à 40% d'au moins un métal hydro-déshydrogénant choisi parmi les éléments du groupe VIII choisi parmi le Fer, le Cobalt ou le Nickel, et du groupe VIB.
- 0 à 20%, de préférence de 0,1 à 15% et de manière encore plus préférée de 0,1 à 10% d'au moins un élément promoteur choisi dans le groupe constitué par le silicium, le bore et le phosphore, non compris le silicium provenant de la silice-alumine du support, de préférence l'élément est le bore et/ou le silicium,
- 0 à 20%, de préférence de 0,1 à 15% et de manière encore plus préférée de 0,1 à 10% d'au moins un élément choisi dans le groupe VIIA, de préférence le fluor,
- 0 à 20%, de préférence 0,1 à 15%, ou encore de 0,1) 10% d'au moins un élément choisi dans le groupe VII B, de préférence le manganèse, le rhénium.
- 0 à 20%, de préférence 0,1 à 15% ou encore de 0,1 à 10% d'au moins un élément choisi dans le groupe VB, de préférence le niobium.

Le catalyseur qui comprend au moins une silice-alumine telle que décrite précédemment dans le brevet, comporte en outre une fonction hydrogénante assurée généralement de préférence par au moins un métal choisi dans le groupe formé par les métaux du groupe VIB et du groupe VIII choisi parmi le Fer, le Cobalt ou le Nickel, de la classification périodique des éléments.

Dans une mise en oeuvre de l'invention, le catalyseur comprend de préférence au moins un élément choisi dans le groupe formé par le bore, le silicium et le phosphore. Le catalyseur renferme éventuellement au moins un élément du groupe VIIA, de préférence le chlore et le fluor, et encore éventuellement au moins un élément du groupe VIIB.

Le bore, le silicium et/ou le phosphore sont localisés de préférence sur la silice-alumine et/ou le support dans le cas où un liant a été utilisé pour la mise en forme de la silice-alumine.

L'élément introduit, et en particulier le silicium, est principalement localisé sur la silice-alumine et/ou le support et peut être caractérisé par des techniques telles que la microsonde de Castaing (profil de répartition des divers éléments), la microscopie électronique par transmission couplée à une analyse X des composants du catalyseurs, ou bien encore par l'établissement d'une cartographie de répartition des éléments présents dans le catalyseur par microsonde électronique.

Les métaux du groupe VIB et du groupe VIII choisi parmi le Fer, le Cobalt ou le Nickel, du catalyseur de la présente invention peuvent être présent en totalité ou partiellement sous la forme métallique et/ou oxyde et/ou sulfure.

Les catalyseurs selon l'invention peuvent être préparés selon toutes les méthodes bien connues de l'homme du métier.

Un procédé préféré de préparation du catalyseur selon la présente invention comprend les étapes suivantes :

a) on sèche et on pèse un solide ci-après dénommé le précurseur, renfermant au moins les composés suivants : éventuellement au moins une matrice, au moins une silice-alumine ayant les caractéristiques décrites précédemment, éventuellement au moins un élément choisi par les éléments du groupe VIB et du groupe VIII choisi parmi le Fer, le Cobalt ou le Nickel, éventuellement au moins un élément choisi dans le groupe phosphore, bore et silicium, éventuellement au moins un élément du groupe VIIA, éventuellement au moins un élément du groupe VB, le tout étant de préférence mis en forme,

b) le solide sec obtenu à l'étape a) est calciné à une température d'au moins 150°C.

b) on laisse reposer le solide humide sous une atmosphère humide à une température comprise entre 10 et 120°C,

d) on sèche le solide humide obtenu à l'étape c) à une température comprise entre 60 et 150°C,

La préparation du précurseur de l'étape a) ci-dessus peut être réalisée selon toutes les méthodes classiques de l'homme du métier. Selon un autre procédé de préparation préféré, le précurseur est obtenu par mise en forme directe de la silice-alumine seule ou par mise en forme de la silice-alumine avec au moins un liant puis séchage et calcination. Les éléments des groupes VIB et/ou VIII choisi parmi le Fer, le Cobalt ou le Nickel et éventuellement ceux choisis parmi phosphore, le bore, le silicium et éventuellement les éléments du groupe VIIA, VB, et VIIB, sont alors éventuellement introduits par toutes méthode connue de l'homme du métier, à l'une quelconque des étapes a) à d), avant ou après la mise en forme et avant ou après la calcination du précurseur ou du catalyseur.

L'élément hydrogénant peut être introduit à toute étape de la préparation, de préférence lors du mélange, ou de manière très préférée après mise en forme. La mise en forme est suivie d'une calcination, l'élément hydrogénant peut également être introduit avant ou après cette calcination. La préparation se termine généralement par une calcination à une température de 250 à 600°C. Une autre des méthodes préférées selon la présente invention consiste à mettre en forme la silice-alumine sans liant en réalisant un malaxage de cette dernière en présence par exemple d'un agent peptisant pendant quelques dizaines de minutes, puis à passer la pâte ainsi obtenue à travers une filière pour former des extrudés de diamètre compris entre 0,4 et 4 mm. La fonction hydrogénante peut être alors introduite en partie seulement (cas, par exemple, des associations d'oxydes de métaux des groupes VIB et VIII choisi parmi le Fer, le Cobalt ou le Nickel ou en totalité, au moment du malaxage. Elle peut également être introduite par une ou plusieurs opérations d'échange ionique sur le support calciné constitué d'au moins une silice-alumine, éventuellement mise en forme avec un liant, à l'aide de solutions contenant les sels précurseurs des métaux choisis lorsque ceux-ci appartiennent au groupe VIII choisi parmi le Fer, le Cobalt ou le Nickel. Elle peut aussi être introduite par une ou plusieurs opérations d'imprégnation du support mis en forme et calciné, par une solution des précurseurs des oxydes des métaux des groupes VIII choisi parmi le Fer, le Cobalt ou le Nickel (notamment le cobalt et le nickel) lorsque les précurseurs des oxydes des métaux du groupe VIB (notamment le molybdène ou le tungstène) ont été préalablement introduits au moment du malaxage du support. Elle peut enfin également être introduite par une ou plusieurs opérations d'imprégnation du support calciné constitué d'au moins une silice-alumine selon l'invention et éventuellement d'au moins un liant, par des solutions contenant les précurseurs des oxydés de métaux des groupes VI et/ou VIII choisi parmi le Fer, le Cobalt ou le Nickel, les précurseurs des oxydes de métaux de groupe VIII choisi parmi le Fer, le Cobalt ou le Nickel étant de préférence introduits après ceux du groupe VIB ou en même temps que ces derniers.

D'une façon préférée, le support est imprégné par une solution aqueuse. L'imprégnation du support est de préférence effectuée par la méthode d'imprégnation dite "à sec" bien connue de l'homme du métier. L'imprégnation peut être effectuée en une seule étape par une solution contenant l'ensemble des éléments constitutifs du catalyseur final.

Le catalyseur de la présente invention peut donc renfermer au moins un élément du groupe VIII choisi parmi le Fer, le Cobalt ou le Nickel. Le catalyseur selon l'invention peut également renfermer au moins un élément du groupe VIB, de préférence le tungstène et le molybdène. D'une manière avantageuse on utilise les associations de métaux suivantes : nickel-molybdène, cobalt-molybdène, fer-molybdène, fer-tungstène, nickel-tungstène, cobalt-tungstène, les associations préférées sont : nickel-molybdène, cobalt-molybdène, nickel-tungstène, cobalt-tungstène. Il est également possible d'utiliser des associations de trois métaux par exemple nickel-cobalt-molybdène, nickel-cobalt-tungstène. D'une manière avantageuse on utilise les associations de métaux suivantes : nickel-niobium-molybdène, cobalt-niobium-molybdène, fer-niobium-molybdène, nickel-niobium-tungstène, cobalt-niobium-tungstène, fer-niobium-tungstène, les associations préférés étant : nickel-niobium-molybdène, cobalt-niobium-molybdène. Il est également possible d'utiliser des associations de quatre métaux par exemple nickel-cobalt-niobium-molybdène.

Les éléments suivants : bore et/ou silicium et/ou phosphore et éventuellement l'(les) élément(s) choisi(s) dans le(s) groupe(s) VIIA, VIIB et VB, peuvent être introduits dans le catalyseur à tout niveau de la préparation et selon toute technique connue de l'homme du métier.

Une méthode préférée selon l'invention consiste à déposer le ou les éléments promoteurs choisis, par exemple le couple bore-silicium, sur le précurseur calciné ou non, de préférence calciné. Pour cela on prépare une solution aqueuse d'au moins un sel de bore tel que le biborate d'ammonium ou le pentaborate d'ammonium en milieu alcalin et en présence d'eau oxygénée et on procède à une imprégnation dite à sec, dans laquelle on rempli le volume des pores du précurseur par la solution contenant par exemple le bore. Dans le cas où l'on dépose par exemple également du silicium, on utilisera par exemple une solution d'un composé du silicium de type silicone ou émulsion d'huile silicone.

Le dépôt de bore et de silicium peut aussi être réalisé de manière simultanée en utilisant par exemple une solution contenant un sel de bore et un composé du silicium de type silicone. Ainsi, par exemple dans le cas où le précurseur est un catalyseur de type nickel-tungstène supporté sur silice-alumine, il est possible d'imprégner ce précurseur par de la solution aqueuse de biborate d'ammonium et de silicone Rhodorsil E1P de la société Rhodia de procéder à un séchage par exemple à 120°C, puis d'imprégner par une solution de fluorure d'ammonium, de procéder à un séchage par exemple à 120°C, et de procéder à une calcination par exemple et de façon préférée sous air en lit traversé, par exemple à 500°C pendant 4 heures.

L'élément promoteur choisi dans le groupe formé par le silicium, le bore et le phosphore et l'élément choisi parmi les ions halogénures du groupe VIIA ainsi que les éléments des groupes VIIB, VB, peuvent être introduits par une ou plusieurs opérations d'imprégnation avec excès de solution sur le précurseur calciné.

Ainsi, par exemple, il est possible d'imprégner le précurseur par une solution aqueuse de biborate d'ammonium ou de silicone Rhodorsil E1 P de la société Rhône Poulenc de procéder à un séchage par exemple à 120°C, puis d'imprégner par une solution de fluorure d'ammonium, de procéder à un séchage par exemple à 120°C, et de procéder à une calcination par exemple et de façon préférée sous air en lit traversé, par exemple à 500°C pendant 4 heures. On dépose ensuite l'élément du groupe VB et/ou VIIB selon toute méthode connue de l'homme de métier.

D'autres séquences d'imprégnation peuvent être mises en oeuvre pour obtenir le catalyseur selon l'invention.

Il est par exemple possible d'imprégner le précurseur avec une solution contenant un des éléments promoteurs (P, B, Si), de sécher, de calciner puis d'imprégner le solide obtenu avec la solution contenant un autre élément promoteur, de sécher, de calciner. Il est aussi possible d'imprégner le précurseur avec une solution contenant deux des éléments promoteurs, de sécher, de calciner puis d'imprégner le solide obtenu avec la solution contenant un autre élément promoteur, de sécher, et de procéder à une calcination finale.

Dans le cas où les éléments sont introduits en plusieurs imprégnations des sels précurseurs correspondants, une étape de calcination intermédiaire du catalyseur devra être effectuée à une température, par exemple et préférentiellement, comprise entre 250 et 600 °C.

L'imprégnation du molybdène peut être facilitée par ajout d'acide phosphorique dans les solutions de paramolybdate d'ammonium, ce qui permet d'introduire aussi le phosphore de façon à promouvoir l'activité catalytique. D'autres composés du phosphore peuvent être utilisés comme il est bien connu de l'homme du métier.

L'imprégnation du niobium peut être facilitée par ajout d'acide oxalique et éventuellement d'oxalate d'ammonium dans les solutions de d'oxalate de niobium. D'autres composés peuvent être utilisés pour améliorer la solubilité et faciliter l'imprégnation du niobium comme il est bien connu de l'homme du métier.

La source de phosphore préférée est l'acide orthophosphorique $H_3PO_4$, mais ses sels et esters comme les phosphates d'ammonium conviennent également. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole.

Dé nombreuses sources de silicium peuvent être employées. Ainsi, on peut utiliser l'orthosilicate d'éthyle Si$(OEt)_4$, les siloxanes, les polysiloxanes, les silicones, les émulsions de silicones, les silicates d'halogénures comme le fluorosilicate d'ammonium $(NH_4)_2SiF_6$ ou le fluorosilicate de sodium $Na_2SiF_6$. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool. Le silicium peut être ajouté par exemple par imprégnation d'un composé du silicium de type silicone ou l'acide silicique mis en suspension dans l'eau.

La source de bore peut être l'acide borique, de préférence l'acide orthoborique $H_3BO_3$, le biborate ou le pentaborate d'ammonium, l'oxyde de bore, les esters boriques. Le bore peut par exemple être introduit sous la forme d'un mélange d'acide borique, d'eau oxygénée et un composé organique basique contenant de l'azote tels que l'ammoniaque, les amines primaires et secondaires, les amines cycliques, les composés de la famille de la pyridine et des quinoléines et les composés de la famille du pyrrole. Le bore peut être introduit par exemple par une solution d'acide borique dans un mélange eau/alcool.

Les sources d'éléments du groupe VIIA qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium $(NH_4)_2SiF_6$, le tétrafluorure de silicium $SiF_4$ ou de sodium $Na_2SiF_6$. Le fluor peut être introduit par exemple par imprégnation d'une solution aqueuse d'acide fluorhydrique ou de fluorure d'ammonium.

Les sources d'éléments du groupe VIB qui peuvent être utilisées sont bien connues de l'homme du métier. Par exemple, parmi les sources de molybdène et de tungstène, on peut utiliser les oxydes et hydroxydes, les acides molybdiques et tungstiques et leurs sels en particulier les sels d'ammonium tels que le molybdate d'ammonium, l'heptamolybdate d'ammonium, le tungstate d'ammonium, l'acide phosphomolybdique, l'acide phosphotungstique et leurs sels, l'acide silicomolybdique, l'acide silicotungstique et leurs sels. On utilise de préférence les oxydes et les sels d'ammonium tels que le molybdate, d'ammonium, l'heptamolybdate d'ammonium et le metatungstate d'ammonium.

Les sources d'éléments du groupe VIII qui peuvent être utilisées sont bien connues de l'homme du métier. Par exemple, pour les métaux non nobles on utilisera les nitrates, les sulfates, les phosphates, les halogénures par exemple, chlorures, bromures et fluorures, les carboxylates par exemple acétates et carbonates. Pour les métaux nobles on utilisera les halogénures, par exemple les chlorure, les nitrates, les acides tels que l'acide chloroplatinique, les oxychlorures tels que l'oxychlorure ammoniacal de ruthénium.

De façon générale, les catalyseurs selon l'invention sont utilisés pour le traitement des coupes hydrocarbonées.

Les catalyseurs ainsi obtenus sont utilisés avantageusement pour l'hydrocraquage, en particulier de coupes hydrocarbonées (par exemple de type distillats sous vide, résidus désasphaltés ou hydrotraités ou équivalents). Les coupes lourdes comprennent de préférence au moins 80% en volume de composés dont les points d'ébullition sont d'au moins 350°C et de préférence entre 350 et.environ 600 °C. Elles contiennent généralement des hétéroatomes tels que soufre et azote. La teneur en azote est usuellement comprise entre 100 et 5000 ppm poids et la teneur en soufre entre 0,01 et 5% poids.

Le catalyseur de la présente invention peut être utilisé seul, en un seul ou plusieurs lits catalytiques dans un schéma d'hydrocraquage une étape, avec ou sans recyclage liquide dans l'hydrocraquage de la fraction non convertie, de préférence en association avec un catalyseur d'hydrotraitement situé en amont du catalyseur de la présente invention. Dans un schéma d'hydrocraquage deux étapes avec séparation intermédiaire entre les deux réacteurs d'hydrocraquage le catalyseur de la présente invention peut être utilisé dans l'un ou dans les deux réacteurs en association ou pas avec un catalyseur d'hydrotraitement situé en amont du catalyseur de la présente invention.

Les charges employées dans le procédé sont, le plus souvent, des gasoils lourds, des gasoils sous vide, des résidus atmosphériques, des résidus sous vide, des distillats atmosphériques, des distillats sous vide, des.fuels lourds, des huiles, (des cires et des paraffines), des huiles usagées, des résidus ou des bruts désasphaltés, des charges provenant des procédés de conversion thermique ou catalytique et leurs mélanges. Elles peuvent contenir des hétéroatomes tels que soufre, oxygène et azote et éventuellement des métaux ou avoir été probablement prétraités (hydroraffinage/hydrotraitement) pour réduire la teneur en hétéroatomes. Les charges contiennent de préférence moins de 30% poids de paraffines, et mieux moins de 25% ou encore moins de 20%.

Les conditions de l'hydrocraquage telles que température, pression, taux de recyclage d'hydrogène, vitesse volumique horaire, pourront être très variables en fonction de la nature de la charge, de la qualité des produits désirés et des installations dont dispose le raffineur. La température est en général supérieure à 200°C et souvent comprise entre 250°C et 480°C. La pression est supérieure à 0,1 MPa et souvent supérieure à 1 MPa. La quantité d'hydrogène est au minimum de 50 litres d'hydrogène par litre de charge et souvent compris entre 80 et 5000 litres d'hydrogène par litre de charge. La vitesse volumique horaire est comprise en général entre 0,1 et 20 volume de charge par volume de catalyseur et par heure ($h^{-1}$).

Les catalyseurs de la présente invention sont de préférence soumis à un traitement de sulfuration permettant de transformer, au moins en partie, les espèces métalliques ou oxydes (éléments du catalyseur) en sulfure avant leur mise en contact avec la charge à traiter. Ce traitement d'activation par sulfuration est bien connu de l'homme du métier et peut être effectué par toute méthode déjà décrite dans la littérature.

La sulfuration peut se faire par toute méthode connue de l'homme du métier et à toute étape de la préparation. La méthode préférée selon l'invention consiste à chauffer le catalyseur non calciné sous flux d'un mélange hydrogène-hydrogène sulfuré ou sous flux d'un mélange azote-hydrogène sulfuré ou encore sous hydrogène sulfuré pur à une température comprise entre 150 et 800°C, de préférence entre 250 et 600°C, généralement dans une zone réactionnelle à lit traversé.

La source de soufre peut être le soufre élémentaire, le sulfure de carbone, l'hydrogène sulfuré, les hydrocarbures soufrés tels que le diméthyl sulfure, le diméthyl disulfure, les mercaptans, les composés du thiophène, les thiols, les polysulfures tels que par exemple le ditertiononylpolysulfure ou TPS-37 de la société ATOCHEM, les coupes pétrolières riches en soufre telles que l'essence, le kérosène, le gazole, seuls ou en mélanges avec un des composés soufrés cité ci-dessus. La source de soufre préférée est le sulfure de carbone ou l'hydrogène sulfuré.

D'une façon générale, les sélectivités en distillat moyen obtenues sont d'au moins 65% ou supérieures à 65% pds, et les rapports gasoils/kérosène sont d'au moins 1,3 et le plus souvent supérieures à 1,3 ou d'au moins 1,4 (% pds / % pds).

Les exemples qui suivent illustrent l'invention sans toutefois en limiter la portée.

### Exemple 1 : Préparation du catalyseur C1 conforme à l'invention

Le support A est une silice-alumine ayant une composition chimique de 40%poids $SiO_2$ et de 60%poids $Al_2O_3$. Son rapport Si/Al molaire est de 0.56. Sa teneur en Na est de l'ordre 100-120 ppm poids. Il est sous forme d'extrudés cylindriques de diamètre 1.7 mm. Sa surface spécifique est de 320 $m^2$/g. Son volume poreux total, mesuré par porosimétrie au mercure est de 0.83 cc/g. La distribution de pores est bimodale. Dans le domaine des mésopores nous observons un large pic entre 40 et 150 Å avec un maximum en dV/dD vers 70 Å. Sur le support, des macropores ayant une taille supérieure à 500 Å représentent environ 40% du volume poreux total.

Le catalyseur C1 est obtenu par imprégnation à sec du support A par une solution aqueuse renfermant des sels de tungstène et de nickel. Le sel de tungstène est le métatungstate d'ammonium $(NH_4)_6H_2W_{12}O_{40}*4H_2O$ et celui de nickel est le nitrate de nickel $Ni(NO_3)_2*6H_2O$. Après maturation à température ambiante dans un atmosphère saturée en eau, les extrudés imprégnés sont séchés à 120°C pendant une nuit puis calcinés à 500 °C sous air sec. La teneur finale en $WO_3$ est de 25%pds. La teneur finale en NiO est de 3,5%pds.

### Exemple 2 : Préparation du catalyseur C2 conforme à l'invention

Le catalyseur C2 est obtenu par imprégnation à sec du catalyseur C1 par une solution contenant du biborate d'ammonium $[(NH_4)_2B_4O_7*4H_2O]$ et l'émulsion de silicone Rhodorsil EP1 de Rhodia. Après maturation à température ambiante dans un atmosphère saturée en eau, les extrudés imprégnés sont séchés à 120°C pendant une nuit puis calcinés à 500 °C sous air sec. La teneur finale en $B_2O_3$ est de 3.2 %pds. La teneur finale en $SiO_2$ reimprégné est de 2.14 %pds.

### Exemple 3 : Préparation du catalyseur C3 conforme à l'invention

Le catalyseur C3 est obtenu par imprégnation à sec du catalyseur C1 par une solution contenant du biborate d'ammonium. Après maturation à température ambiante dans un atmosphère saturée en eau, les extrudés imprégnés sont séchés à 120°C pendant une nuit puis calcinés à 500 °C sous air sec. La teneur finale en $B_2O_3$ est de 3.2 %pds.

### Exemple 4 : Préparation du catalyseur C4 conforme à l'invention

Le catalyseur C4 est obtenu par imprégnation à sec du catalyseur C1 par une solution contenant l'émulsion de silicone Rhodorsil EP1. Après maturation à température ambiante dans un atmosphère saturée en eau, les extrudés imprégnés sont séchés à 120°C pendant une nuit puis calcinés à 500 °C sous air sec. La teneur finale en $SiO_2$ reimprégné est de 2.14 %pds.

### Exemple 4 : Evaluation des catalyseurs C1, C2, C3, C4 et C5

Les catalyseurs dont les préparations sont décrites dans les exemples précédents sont utilisés dans les conditions de l'hydrocraquage d'un distillat sous vide dont les principales caractéristiques sont données dans le tableau suivant :

| Type de Charge | | Distillat Sous Vide |
|---|---|---|
| Densité à 20 °C | | 0.904 |
| Point d'Ecoulement °C | | + 21 |
| Soufre | % poids | 2.2 |
| Azote | ppm poids | 620 |
| **Distillation simulée** | | |
| DS | :Point initial °C | 345 |
| DS | :05%p °C | 368 |
| DS | :10%p °C | 375 |
| DS | :50%p °C | 402 |
| DS | :90%p °C | 428 |
| DS | :Point final °C | 467 |

Le test est mené dans un réacteur pilote à lit fixe traversé, les fluides circulant de bas en haut (up-flow). La sulfuration du catalyseur est effectuée à 120 bars, à 350 °C au moyen d'un gasoil de distillation directe additionné de 2 % pds de DMDS.

Après sulfuration, le test catalytique s'effectue dans les conditions suivantes :

| Pression totale | 14 MPa |
|---|---|
| VVH | 0.65 $h^{-1}$ |

Les performances catalytiques des catalyseurs testés sont données dans le tableau suivant. Les performances catalytiques sont exprimées par la température qui permet d'atteindre un niveau de conversion brute de 80 %, par la sélectivité brute en distillat moyen pour une conversion brute de 80%, et le rapport rendement gasoil/ rendement carburéacteur dans la fraction distillat moyen pour une conversion brute de 80%. Elles sont exprimées à partir des résultats de distillation simulée (méthode ASTM D86).

La conversion brute CB est prise égale à :

$$\text{CB= \%pds de 380 °C}^{\text{moins}} \text{ dans l'effluent}$$

La sélectivité brute SB est prisé égale à :

$$\text{SB= 100* (poids de la fraction(150 °C-380 °C)/poids de la fraction 380 °C}^{\text{moins}} \text{ dans l'effluent)}$$

Le rendement gasoil/ rendement carburéacteur (rapport GO/KER) dans la fraction distillat moyen est prise égale à :

$$\text{Rapport GO/KER= rendement de la fraction (250°C-380°C) de l'effluent /rendement de la fraction (150°C à moins de 250°C) dans l'effluent}$$

Activité des catalyseurs en hydrocraquage de distillats sous vide

| Catalyseur | T °C pour 80% conversion brute | SB %poids | Rapport GO/KER %poids/%poids |
|---|---|---|---|
| C1 | 398 | 69 | 1.50 |
| C2 (Bsi) | 394 | 69 | 1.40 |
| C3 (B) | 396 | 69 | 1.45 |
| C4 (Si) | 396 | 69 | 1.47 |

Les résultats catalytiques indiquent que le catalyseur C1 supporté sur une silice-alumine particulière selon l'invention est très convertissant et surtout très sélectif en distillat moyen. De plus, dans la fraction distillat moyen, nous obtenons un rapport GO/KER élevé. Le catalyseur C1 a donc une sélectivité particulièrement élevée en gasoil, coupe particulièrement recherchée par la demanderesse. Les performances du catalyseur C1 sont liées à l'acidité particulière du catalyseur C1 supporté sur une silice-alumine particulière. L'utilisation de cette silice-alumine comme support est donc particulièrement avantageuse pour obtenir un catalyseurs d'hydrocraquage très actifs qui sont très sélectifs en distillat moyen.

On note également, que les catalyseurs C2, C3 et C4, obtenus à partir du catalyseur C1, respectivement pas ajout de BSi, B et Si, ont des activités améliorées par rapport au catalyseur C1. Les sélectivités en distillat moyen sont identiques. Néanmoins, sur les catalyseurs C2, C3 et C4 nous observons des rapports GO/KER un peu différents par rapport à celui du catalyseur C1. Avec l'augmentation de l'activité des catalyseurs, nous observons la diminution du rapport GO/KER.

**Revendications**

1.  Catalyseur comprenant au moins un élément hydrodéshydrogénant choisi parmi les métaux du groupe VIB et du groupe VIII, les éléments du groupe VIII étant choisi parmi le Fer, le Cobalt ou le Nickel et un support comprenant au moins une silice-alumine, ladite silice-alumine possédant les caractéristiques suivantes :

    - une teneur pondérale en silice de 10-60% pds,
    - une teneur en sodium inférieure à 300ppm pds,
    - un volume poreux total compris entre 0,5 et 1,2 ml/g,
    - le volume des mésopores de diamètre compris entre 40-150A (4-15nm) et de diamètre moyen compris entre 80-120A (8-12nm) représente 30-80% du volume poreux total,
    - le volume des macropores de diamètre supérieur à 500A (50nm) représente 20-80% du volume poreux total,-une surface spécifique supérieure à 200m2/g.

2. Catalyseur selon la revendication 1 dans lequel l'élément hydrodéshydrogénant est un élément du groupe VIB.

3. Catalyseur selon la revendication 2 dans lequel le catalyseur comprend également un élément du groupe VIII.

4. Catalyseur selon la revendication 3 dans lequel l'élément du groupe VIII est choisi parmi le Fer, le Cobalt ou le Nickel.

5. Catalyseur selon l'une des revendications précédentes dans lequel la silice-alumine comporte des espèces AiV. (octaédrique) et d'AI'V (tétraédrique), la proportion des AIIV tétraédriques s'établissant entre de 20 et 40%.

6. Catalyseur selon l'une des revendications précédentes dans lequel la silice-alumine 20 comporte 30-50% d'espèces Q2 dans lesquelles un atome Si est lié à deux atomes Si ou AI et à deux groupes OH, et comporte également 10-30% d'espèces Q3 dans lesquelles un atome Si est lié à trois atomes Si ou Ai et à un groupe OH, selon la RMN de $^{29}$Si.

7. Catalyseur selon l'une des revendications précédentes contenant un élément promoteur choisis parmi le bore et/ou le silicium.

8. Catalyseur selon l'une des revendications précédentes contenant au moins un élément choisi parmi des groupes VIIA, VIIB, et VB.

9. Catalyseur selon l'une des revendications précédentes dans lequel le support est constitué par la silice-alumine.

10. Catalyseur selon l'une des revendications 1 à 5 dont le support comprend 1-40% pds de liant.

11. Catalyseur selon la revendication 10 dans lequel le support résulte du mélange de ladite silice-alumine et d'au moins un liant choisi dans le groupe formé par la silice, l'alumine, les argiles, l'oxyde de titane, l'oxyde de bore, la zircone, l'alumine, les

12. Catalyseur selon l'une des revendications précédentes ayant subi un traitement de sulfuration.

13. Procédé d'hydrocraquage avec un catalyseur selon l'une des revendications précédentes, à une température supérieure à 200°C, une pression supérieure à 10 0,1 Mpa,- avec une quantité d'hydrogène d'au moins 501/l de charge, et avec une vitesse volumique horaire de 0,1 à 20 volume de charge par volume de catalyseur et par heure.

14. Procédé selon la revendication 13 pour l'hydrocraquage de charges choisies dans le groupe formé par les kérosènes, les gasoils, les gasoils sous vide, les résidus 15 atmosphériques, les résidus sous vide, les distillats atmosphériques, les distillats sous vide, les fuels lourds, les huiles, les cires, les paraffines, les huiles usagées, les résidus désasphaltés, les bruts désalphaltés, les charges provenant des procédés de conversion thermique ou catalytique, les charges contenant moins de 30%pds de paraffines.

15. Procédé selon l'une des revendications 13 à 14 dans lequel la charge est préalablement hydrotraitée.

16. Procédé selon l'une des revendications 13 à 15 dans lequel l'hydrocraquage est effectué en deux étapes avec séparation intermédiaire, le catalyseur étant employé dans au moins une étape.

17. Procédé selon l'une des revendications 13 à 16 dans lequel la charge contient moins de 25%pds de paraffines.

**Claims**

1. Catalyst that comprises at least one hydro-dehydrogenating element selected from among the metals of group VIII and group VIB, said metals of group VIII being selected from among iron, cobalt and nickel and a substrate that comprises at least one silica-alumina, whereby said silica-alumina has the following characteristics:

   -- A content by weight of silica of 10-60% by weight,
   -- a sodium content that is less than 300 ppm by weight,

-- a total pore volume of between 0.5 and 1.2 ml/g,

-- the volume of mesopores with a diameter of between 4-15 nm, and a mean diameter of between 8-12 nm represents 30-80% of the total pore volume,

-- the volume of macropores with a diameter that is greater than 50 nm represents 20-80% of the total pore volume,

-- a specific surface area that is greater than 200 $m^2$/g.

2. Catalyst according to claim 1, in which the hydro-dehydrogenating element is a group VIB element.

3. Catalyst according to claim 2, in which said catalyst also comprises a group VIII element.

4. Catalyst according to claim 3, in which the group VIII element is selected from among iron, cobalt and nickel.

5. Catalyst according to one of the preceding claims, in which the silica-alumina comprises $Al_{VI}$ (octahedral) radicals and $Al_{IV}$ (tetrahedral) radicals, whereby the proportion of the tetrahedral $Al_{IV}$ is established between 20 and 40%.

6. Catalyst according to one of the preceding claims, in which the silica-alumina comprises 30-50% of $Q^2$ radicals, in which an Si atom is linked to two Si or Al atoms and to two OH groups and also comprises 10-30% of $Q^3$ radicals in which an Si atom is linked to three Si or Al atoms and to an OH group.

7. Catalyst according to one of the preceding claims that contains boron and/or silicon.

8. Catalyst according to one of the preceding claims that contains at least one element that is selected from among groups VIIA, VIIB, and VB.

9. Catalyst according to one of the preceding claims, in which the substrate is constituted by silica-alumina.

10. Catalyst according to one of the preceding claims 1 to 5, whose substrate comprises 1-40% by weight of binder.

11. Catalyst according to claim 10, in which the substrate results from the mixture of said silica-alumina and at least one binder that is selected from the group that is formed by silica, alumina, clays, titanium oxide, boron oxide and zirconium.

12. Catalyst according to one of the preceding claims that has undergone a sulfurization treatment.

13. Process for hydrocracking with a catalyst according to one of the preceding claims, at a temperature that is greater than 200°C, a pressure that is greater than 0.1 Mpa, with an amount of hydrogen of at least 50 1/1 of feedstock, and with an hourly volumetric flow rate of 0.1 to 20 volumes of feedstock per volume of catalyst and per hour.

14. Process according to claim 13 for the hydrocracking of feedstocks that are selected from the group that is formed by kerosenes, gas oils, vacuum gas oils, atmospheric residues, vacuum residues, atmospheric distillates, vacuum distillates, heavy fuels, oils, waxes, paraffins, waste oils, deasphalted residues, deasphalted crudes, the feedstocks that are obtained from thermal conversion or catalytic conversion processes, whereby the feedstocks contain less than 30% by weight of paraffins.

15. Process according to one of claims 13 to 14, wherein the feedstock is first hydrotreated.

16. Process according to one of claims 13 to 15, in which the hydrocracking is carried out in two stages with intermediate separation, whereby the catalyst is used in at least one stage.

17. Process according to one of claims 13 to 16, in which the feedstock contains less than 25% by weight of paraffin.

**Patentansprüche**

1. Katalysator, umfassend mindestens ein hydrierend-dehydrierendes Element ausgewählt aus den Metallen der Gruppe IIB und der Gruppe VIII, wobei die Elemente der Gruppe VIII aus Eisen, Kobalt oder Nickel ausgewählt sind, sowie einen Träger, der mindestens ein Siliciumdioxid-Aluminiumoxid umfasst, wobei das Siliciumdioxid-Aluminiumoxid die folgenden Eigenschaften besitzt:

- eine gewichtsmäßigen Gehalt an Siliciumdioxid von 10 bis 60 Gew.-%,
- einen Natriumgehalt von weniger als 300 ppm Gewichts-
- ein Gesamtporenvolumen im Bereich von 0,5 bis 1,2 ml/g,
- das Volumen der Mesoporen mit einem Durchmesser im Bereich von 40 bis 150 Å (4 bis 15 nm) und mit einem mittleren Durchmesser im Bereich von 80 bis 120 Å (8-12 nm) macht 30 bis 80 % des Gesamtporenvolumens aus,
- das Volumen an Makroporen mit einem Durchmesser von mehr als 500 Å (50 nm) macht 20 bis 80 % des Gesamtporenvolumens aus,
- eine spezifische Oberfläche von mehr als 200 m$^2$/g.

2.  Katalysator nach Anspruch 1, wobei das hydrierenddehydrierende Element ein Element der Gruppe VIB ist.

3.  Katalysator nach Anspruch 2, wobei der Katalysator weiterhin ein Element der Gruppe VIII umfasst.

4.  Katalysator nach Anspruch 3, wobei das Element der Gruppe VIII aus Eisen, Kobalt oder Nickel ausgewählt ist.

5.  Katalysator nach einem der vorhergehenden Ansprüche, wobei das Siliciumdioxid-Aluminiumoxid Spezies von AlV (oktaedrisch) und AlIV (tetraedrisch) aufweist, wobei der Anteil der tetraedrischen AlIV zwischen 20 und 40 % liegt.

6.  Katalysator nach einem der vorhergehenden Ansprüche, wobei das Siliciumdioxid-Aluminiumoxid 30 bis 50 % an Q2-Spezies aufweist, bei denen ein Si-Atom mit zwei Si- oder Al-Atomen und mit zwei OH-Gruppen verbunden ist, und weiterhin 10 bis 30 % an Q3-Spezies aufweist, bei denen ein Si-Atom mit drei Si- oder Al-Atomen und mit einer OH-Gruppe verbunden ist, gemäß $^{29}$Si-NMR.

7.  Katalysator nach einem der vorhergehenden Ansprüche, enthaltend ein Promotorelement, das aus Bor und/oder Silicium ausgewählt ist,

8.  Katalysator nach einem der vorhergehenden Ansprüche, enthaltend mindestens ein Element, das aus den Gruppen VIIA, VIIB und VB ausgewählt ist.

9.  Katalysator nach einem der vorhergehenden Ansprüche, wobei der Träger aus dem Siliciumdioxid-Aluminiumoxid besteht.

10. Katalysator nach einem der Ansprüche 1 bis 5, wobei dessen Träger 1 bis 40 Gew.-% an Bindemittel umfasst.

11. Katalysator nach Anspruch 10, wobei der Träger durch Vermischen des Siliciumdioxid-Aluminiumoxids mit mindestens einem Bindemittel entsteht, welches aus der Gruppe ausgewählt ist, die von Siliziumdioxid, Aluminiumoxid, Tonen, Titanoxid, Boroxid und Zirkoniumdioxid gebildet wird.

12. Katalysator nach einem der vorhergehenden Ansprüche, wobei dieser eine Schwefelungsbehandlung erfahren hat.

13. Hydrocrackverfahren mit einem Katalysator nach einem der vorhergehenden Ansprüche, bei einer Temperatur von mehr als 200 °C, einem Druck von mehr als 0,1 MPa, mit einer Wasserstoffmenge von mindestens 50l/1 an Charge, und mit einer stundenbezogenen Volumengeschwindigkeit von 0,1 bis 20 Volumen an Charge pro Volumen an Katalysator und pro Stunde.

14. Verfahren nach Anspruch 13 zum Hydrocracken von Chargen, die aus der Gruppe ausgewählt sind, welche von den Kerosinen, den Gasölen, den Vakuumgasölen, den Normaldruckrückständen, den Vakuumrückständen, den Normaldruckdestillaten, den Vakuumdestillaten, den schweren Heizölen, den Ölen, den Wachsen, den Paraffinen, den Altölen, den entasphaltierten Rückstände, den entasphaltierten Rohölen, den Chargen, welche aus Verfahren zur thermischen oder katalytischen Umwandlung stammen, den Chargen, welche weniger als 30 Gew.-% an Paraffinen enthalten, gebildet wird.

15. Verfahren nach einem der Ansprüche 13 bis 14, wobei die Charge im Vorfeld hydrobehandelt wird.

16. Verfahren nach einem der Ansprüche 13 bis 15, wobei das Hydrocracken in zwei Schritten mit zwischengeschaltetem Trennvorgang durchgeführt wird, wobei der Katalysator in mindestens einem Schritt eingesetzt wird.

17. Verfahren nach einem der Ansprüche 13 bis 16, wobei die Charge weniger als 25 Gew.-% an Paraffinen enthält.

**EP 1 353 747 B1**

## RÉFÉRENCES CITÉES DANS LA DESCRIPTION

### Documents brevets cités dans la description

- GB 1324205 A
- EP 666894 B2